# FASCICULE DE BREVET EUROPEEN

(11) **EP 2 569 172 B1**
(45) Date de publication et mention de la délivrance du brevet: **16.04.2014**
(21) Numéro de dépôt: 11720435.4
(22) Date de dépôt: 11.05.2011
(51) Int. Cl.: B60C 15/00, B60C 15/04, B60C 15/06

(54) **PNEUMATIQUE COMPORTANT UN BOURRELET PERFECTIONNE.**
REIFEN MIT VERBESSERTEM WULST
TIRE COMPRISING AN IMPROVED BEAD

(30) Priorité: 12.05.2010 FR 1053711
(43) Date de publication de la demande: 20.03.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: JOHNSON, Philippe, F-63040 Clermont-Ferrand Cedex 9 (FR); LENEPVEU, Olivier, F-63040 Clermont-Ferrand Cedex 9 (FR)
(74) Mandataire: Randl, Oliver Georg
(86) Numéro de dépôt international: PCT/EP2011/057581
(87) Numéro de publication internationale: WO 2011/141493

(56) Documents cités:
- EP-A1- 0 938 985
- WO-A1-2008/107234
- FR-A1- 2 254 450
- GB-A- 1 576 424
- US-A1- 2003 106 627
- US-A1- 2009 025 848

## Description

### DOMAINE DE L'INVENTION

La présente invention concerne les pneumatiques à armature de carcasse radiale destinés à équiper des véhicules poids lourd et encore plus particulièrement la structure de bourrelet de ces pneumatiques.

### ARRIERE-PLAN

Les bourrelets des pneumatiques à armature de carcasse radiale sont soumis à d'importantes sollicitations au cours du roulage du véhicule en raison des tensions transmises au bourrelet par l'armature de carcasse et des efforts de compression que le bourrelet subit du fait de son montage sur une jante. De plus, le port de la charge du véhicule sur lequel le pneumatique est monté entraîne une flexion de l'ensemble des constituants du bourrelet sur le crochet de la jante, dirigée vers l'extérieur du pneumatique, ainsi qu'une déradialisation des éléments de renfort constituant la nappe carcasse. Il en résulte des contraintes importantes dans les matériaux constituant le bourrelet, notamment dans les portions de mélange caoutchouteux situées à proximité immédiate des extrémités des nappes. Ces contraintes peuvent être telles que l'intégrité du bourrelet est compromise, car des fissures se propagent à partir des extrémités des nappes dans les portions de mélange caoutchouteux qui les entourent. Du fait de l'orientation radiale des éléments de renfort qui la composent, l'armature de carcasse est particulièrement sensible à ce risque d'endommagement, mais d'éventuelles armatures de renfort additionnelles disposées dans le bourrelet peuvent également être concernées.

Plusieurs structures de bourrelets limitant les risques d'amorçage de fissure sont connues ; voir par exemple les documents US 2009/0025848**,** US 2008/0190539 ou encore WO 2008/107234**.** Elles se caractérisent par l'absence d'extrémité libre de l'armature de carcasse : celle-ci est enroulée directement sur la tringle gainée d'une languette textile ou d'une gomme. Ces solutions ont permis d'améliorer significativement l'endurance des bourrelets de pneumatiques dans des conditions d'utilisation intense. Leur inconvénient réside dans le fait que leur fabrication n'est pas aisée et qu'on assiste parfois à un décollement au niveau de la transition entre le bourrelet et le flanc.

### RESUME DE L'INVENTION

La présente invention vise à définir une structure de bourrelet sans extrémité libre de l'armature de carcasse dont la fabrication est robuste et aisée, tout en préservant l'endurance du bourrelet.

Cet objectif est atteint par un pneumatique pour véhicule poids lourd, destiné à être monté sur une jante, comportant :
un sommet comprenant une armature de sommet surmontée d'une bande de roulement ;
deux flancs prolongeant le sommet radialement vers l'intérieur ;
deux bourrelets radialement intérieurs aux flancs et destinés à coopérer avec la jante, chaque bourrelet comportant une structure d'ancrage, la structure d'ancrage ayant, dans toute coupe radiale, un point (AS) axialement le plus à l'intérieur et un point (CS) axialement le plus à l'extérieur, un point (BS) radialement le plus à l'intérieur et un point (DS) radialement le plus à l'extérieur, la structure d'ancrage comprenant une armature de renforcement circonférentiel, l'armature de renforcement circonférentiel ayant, dans toute coupe radiale, un point (AT) axialement le plus à l'intérieur et un point (CT) axialement le plus à l'extérieur, un point (BT) radialement le plus à l'intérieur et un point (DT) radialement le plus à l'extérieur ;
une armature de carcasse radiale comprenant une pluralité d'éléments de renforcement orientés selon une direction faisant un angle supérieur ou égal à 80 degrés avec la direction circonférentielle, l'armature de carcasse étant ancrée dans chacun des bourrelets à la structure d'ancrage, l'armature de carcasse étant en partie enroulée autour de la structure d'ancrage en passant axialement de l'intérieur du pneumatique vers l'extérieur, de sorte que, dans toute section radiale, un point d'extrémité de cette armature de carcasse est localisé sur ou à proximité de la structure d'ancrage et situé axialement entre le point axialement le plus à l'intérieur et le point axialement le plus à l'extérieur de la structure d'ancrage ;
une armature de couplage, formée d'une pluralité de renforts orientés dans une direction faisant un angle supérieur ou égal à 70 degrés avec la direction circonférentielle, comprenant une première partie en contact avec l'armature de carcasse entre un premier point d'extrémité, le premier point d'extrémité étant radialement à l'extérieur par rapport au point radialement le plus à l'extérieur de la structure d'ancrage, et ledit point d'extrémité de l'armature de carcasse, l'armature de couplage se prolongeant au delà dudit point d'extrémité de l'armature de carcasse par une seconde partie en contact avec la structure d'ancrage jusqu'à un deuxième point d'extrémité radialement à l'extérieur de l'armature de renforcement circonférentiel, le deuxième point d'extrémité de l'armature de couplage étant situé axialement entre le point axialement le plus à l'intérieur et le point axialement le plus à l'extérieur de la structure d'ancrage.

Dans toute section radiale, le contour de l'armature de renforcement circonférentiel possède une partie intérieure, s'étendant entre le point (AT) axialement le plus à l'intérieur de l'armature de renforcement circonférentiel et le point (CT) axialement le plus à l'extérieur de l'armature de renforcement circonférentiel, en passant par le point (BT) radialement le plus à l'intérieur de l'armature de renforcement circonférentiel ; la distance de tout point situé sur la partie intérieure du contour de l'armature de renforcement circonférentiel par rapport au segment reliant le point (AT) axialement le plus à l'intérieur de l'armature de renforcement circonférentiel et le point (CT) axialement le plus à l'extérieur de l'armature de renforcement circonférentiel est inférieure ou égale à 20 % de la de la longueur du segment reliant le point (AT) axialement le plus à l'intérieur de l'armature de renforcement circonférentiel et le point (CT) axialement le plus à l'extérieur de l'armature de renforcement circonférentiel.

De plus, dans toute section radiale, le rayon passant par :
le point (AS) axialement le plus à l'intérieur de la structure d'ancrage ;
le point (DS) radialement le plus à l'extérieur de la structure d'ancrage ; et
le point (PS) d'intersection entre la médiatrice du segment reliant le point (AS) axialement le plus à l'intérieur de la structure d'ancrage et le point (DS) radialement le plus à l'extérieur de la structure d'ancrage, et le contour de la structure d'ancrage ;
est supérieur ou égal à un quart de la longueur du segment reliant le point (AS) axialement le plus à l'intérieur de la structure d'ancrage et le point (CS) axialement le plus à l'extérieur de la structure d'ancrage, et inférieur ou égal à 1.5 fois la longueur du segment reliant le point (AS) axialement le plus à l'intérieur de la structure d'ancrage et le point (CS) axialement le plus à l'extérieur de la structure d'ancrage.

Enfin, dans toute section radiale, le rayon passant par :
le point (CS) axialement le plus à l'extérieur de la structure d'ancrage ;
le point (DS) radialement le plus à l'extérieur de la structure d'ancrage ; et
le point (QS) d'intersection entre la médiatrice du segment reliant le point (CS) axialement le plus à l'extérieur de la structure d'ancrage et le point (DS) radialement le plus à l'extérieur de la structure d'ancrage, et le contour de la structure d'ancrage ;
est supérieur ou égal à un quart de la longueur du segment reliant le point (AS) axialement le plus à l'intérieur de la structure d'ancrage et le point (CS) axialement le plus à l'extérieur de la structure d'ancrage, et inférieur ou égal à 1.5 fois la longueur du segment reliant le point (AS) axialement le plus à l'intérieur de la structure d'ancrage et le point (CS) axialement le plus à l'extérieur de la structure d'ancrage.

En d'autres termes, dans un pneumatique selon l'invention, l'armature de renforcement circonférentiel comporte une partie sensiblement plane qui serre le pneumatique sur la jante de montage et qui améliore l'ancrage de l'extrémité de l'armature de carcasse sous l'armature de renforcement circonférentiel. La structure d'ancrage quant à elle comporte une partie arrondie qui permet de générer une forte adhésion entre l'armature de couplage et la structure d'ancrage. Cette partie arrondie peut être obtenue, par exemple, par l'utilisation d'une structure d'ancrage métallique ayant elle-même une partie arrondie ou par l'association d'une tringle dépourvue de partie arrondie avec un mélange caoutchouteux ayant une section arrondie appropriée.

Selon un mode de réalisation particulier, le point d'extrémité de l'armature de carcasse localisé sur ou à proximité de la structure d'ancrage est situé radialement à l'intérieur de la structure d'ancrage. Ainsi on évite un retournement de l'armature de carcasse qui peut avoir un effet négatif sur l'endurance du bourrelet.

Selon un mode de réalisation avantageux, le segment reliant le point (BT) radialement le plus à l'intérieur de l'armature de renforcement circonférentiel et le point (CT) axialement le plus à l'extérieur de l'armature de renforcement circonférentiel forme un angle α (alpha) avec la direction axiale, l'angle α (alpha) étant supérieur ou égal à 10° et inférieur ou égal à 20°. Ainsi on obtient un serrage suffisant du bourrelet sur la jante de montage.

Selon un autre mode de réalisation avantageux, dans toute section radiale, la longueur curviligne du contour de l'armature de renforcement circonférentiel, entre le point (BT) radialement le plus à l'intérieur de l'armature de renforcement circonférentiel et le point (CT) axialement le plus à l'extérieur de l'armature de renforcement circonférentiel, est supérieure ou égale à 10 mm. Ainsi on obtient un ancrage satisfaisant de l'armature de carcasse et une bonne résistance au déroulement de celle-ci.

Selon un autre mode de réalisation avantageux, la longueur de contact entre l'armature de carcasse et la structure d'ancrage, mesurée à partir du point (BS) radialement le plus à l'intérieur de la structure d'ancrage, en direction du point (CS) axialement le plus à l'extérieur de la structure d'ancrage, est supérieure ou égale à 10 mm. Là encore, un bon ancrage de l'armature de carcasse est obtenu.

Un pneumatique selon l'invention comporte avantageusement une armature de rigidité enveloppant l'armature de couplage et passant radialement à l'intérieur de la structure d'ancrage et de l'armature de couplage pour former une portion axialement interne et une portion axialement externe, la portion axialement interne étant axialement à l'intérieur par rapport à l'armature de carcasse, et la portion axialement externe étant axialement à l'extérieur de l'armature de carcasse, la portion axialement interne étant en contact sur une longueur LC avec l'armature de carcasse entre le point d'extrémité de ladite portion axialement interne et le point d'extrémité de l'armature de couplage, le point d'extrémité de ladite portion axialement interne étant situé radialement à l'extérieur du point d'extrémité de l'armature de couplage, cette armature de rigidité étant formée d'une pluralité de renforts orientés selon une direction moyenne faisant un angle inférieur ou égal à 50 degrés avec la direction circonférentielle. La présence d'une telle armature de rigidité permet notamment d'augmenter la rigidité de flexion du bourrelet et de la partie radialement inférieure du flanc.

Il est alors avantageux de prévoir que le point d'extrémité axialement extérieur de l'armature de rigidité soit situé à une distance radiale DR du point radialement le plus à l'intérieur de l'armature de renforcement circonférentiel de la structure d'ancrage, la distance radiale DR étant supérieure ou égale à 0.8 fois la distance radiale DS séparant le point radialement le plus à l'intérieur et le point radialement le plus à l'extérieur de l'armature de renforcement circonférentiel de la structure d'ancrage et inférieure ou égale à 1.2 fois la distance radiale DS séparant le point radialement le plus à l'intérieur et le point radialement le plus à l'extérieur de l'armature de renforcement circonférentiel de la structure d'ancrage.

Bien entendu, il est possible et même souhaitable de combiner deux ou plusieurs des modes de réalisations décrits.

### BREVE DESCRIPTION DES DESSINS

La figure 1 représente un pneumatique selon l'art antérieur.
La figure 2 représente une vue en perspective partielle d'un pneumatique selon l'art antérieur.
La figure 3 représente schématiquement, en section radiale, un partie d'un pneumatique selon l'invention.
Les figures 4 à 8 correspondent chacune à un détail de la figure 3.
La figure 9 représente schématiquement, en section radiale, un partie d'un bourrelet selon l'invention.
Les figures 10 à 13 représentent, en section radiale, une partie d'un pneumatique selon l'invention pendant sa fabrication.

### DESCRIPTION DETAILLEE DES DESSINS

Il convient de distinguer plusieurs utilisations différentes du terme « radial » par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également. Lorsqu'il est dit qu'un point P est radialement à l'extérieur d'un élément du pneumatique, il faut entendre par là qu'il existe au moins un point de cet élément qui est radialement à l'intérieur du point P. Inversement, on dira d'un point P qu'il est radialement à l'intérieur d'un élément du pneumatique s'il existe au moins un point de cet élément qui se trouve radialement à l'extérieur du point P.

Lorsque plusieurs points d'un élément se qualifient comme « point radialement/axialement le plus à l'intérieur/extérieur » il suffit, pour que la condition relative à ce point soit remplie, qu'elle soit remplie pour l'un quelconque de ces points.

En revanche, un fil ou une armature est dit « radial » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des armatures de renforcement circonférentiel de chaque bourrelet.

Une direction « circonférentielle » est une direction qui est perpendiculaire à la fois à un rayon du pneumatique et à la direction axiale. Une « section circonférentielle » est une section selon un plan perpendiculaire à l'axe de rotation du pneumatique.

Par « surface de roulement » on entend ici l'ensemble des points de la bande de roulement d'un pneumatique qui sont susceptibles d'entrer en contact avec le sol lorsque le pneumatique roule.

L'expression « mélange caoutchouteux » désigne une composition de caoutchouc comportant au moins un élastomère et une charge.

Pour faciliter la lecture de la description des variantes montrées avec les figures, les mêmes références sont employées pour désigner des éléments de structure identiques.

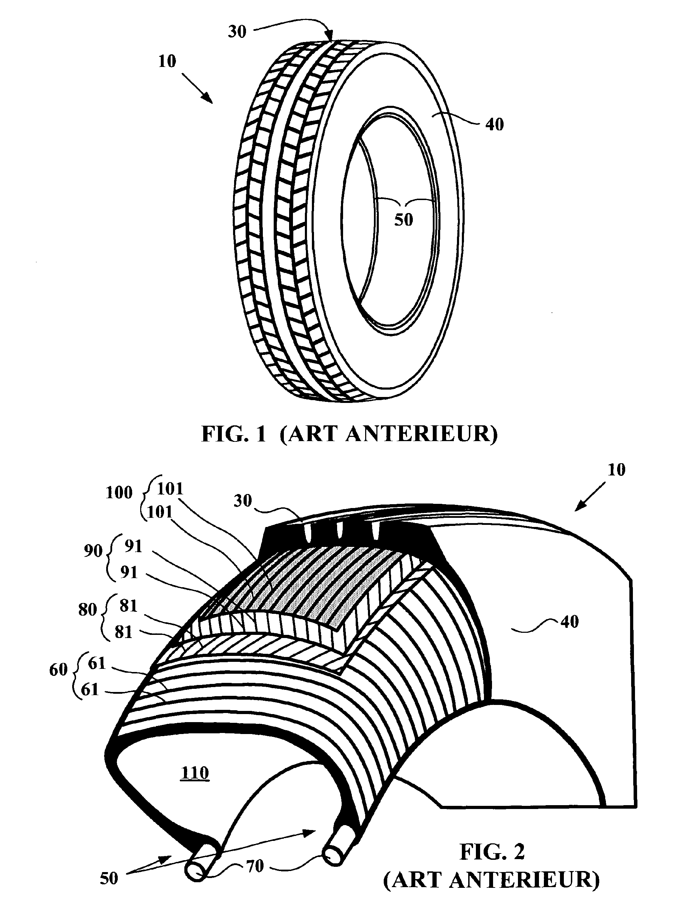

La figure 1 représente schématiquement un pneumatique 10 selon l'art antérieur. Le pneumatique 10 comporte un sommet comprenant une armature de sommet (invisible à la figure 1) surmontée d'une bande de roulement 30, deux flancs 40 prolongeant le sommet radialement vers l'intérieur, ainsi que deux bourrelets 50 radialement intérieurs aux flancs 40.

La figure 2 représente schématiquement une vue en perspective partielle d'un autre pneumatique 10 selon l'art antérieur et illustre les différentes composantes du pneumatique. Le pneumatique 10 comprend une armature de carcasse 60 constituée de fils 61 enrobés de mélange caoutchouteux, et deux bourrelets 50 comportant chacun des armatures de renforcement circonférentielles 70 (ici, des tringles) qui maintiennent le pneumatique 10 sur la jante (non représentée). L'armature de carcasse 60 est ancrée dans chacun des bourrelets 50. Le pneumatique 10 comporte en outre une armature de sommet comprenant deux nappes 80 et 90. Chacune des nappes 80 et 90 est renforcée par des éléments de renforcement 81 et 91 filaires qui sont parallèles dans chaque couche et croisés d'une couche à l'autre, en faisant avec la direction circonférentielle des angles compris entre 10° et 70°. Le pneumatique comporte encore une armature de frettage 100, disposée radialement à l'extérieur de l'armature de sommet, cette armature de frettage étant formée d'éléments de renforcement 101 orientés circonférentiellement et enroulés en spirale. Une bande de roulement 30 est posée sur l'armature de frettage ; c'est cette bande de roulement 30 qui assure le contact du pneumatique 10 avec la route. Le pneumatique 10 représenté est un pneu « tubeless » : il comprend une « gomme intérieure » 110 en composition caoutchouteuse imperméable au gaz de gonflage, recouvrant la surface intérieure du pneumatique.

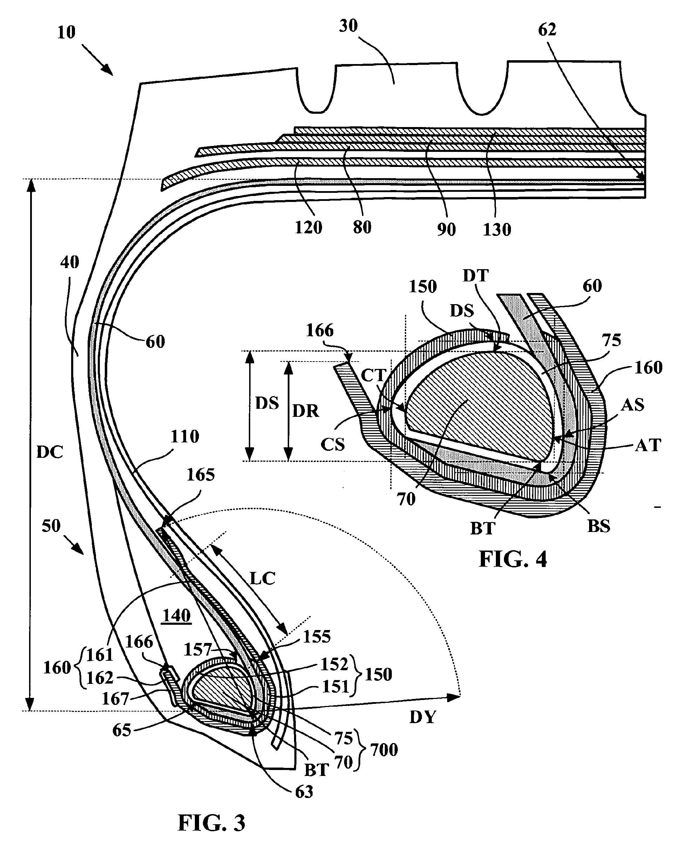

La figure 3 représente schématiquement, en section radiale, un partie d'un pneumatique 10 selon l'invention, de dimension 295/60R22.5. Il s'agit d'un pneumatique pour véhicule poids lourd, destiné à être monté sur une jante (non représentée). Le pneumatique 10 comporte un sommet comprenant une armature de sommet, formée par les nappes 80 et 90, en sandwich entre des nappes de renfort 120 et 130. La nappe de renfort 120 protège l'armature de carcasse de la compression et la nappe de renfort 130 protège l'armature de sommet contre les perforations et les chocs. Cette dernière est surmontée d'une bande de roulement 30. Le pneumatique 10 comporte en outre deux flancs 40 prolongeant le sommet radialement vers l'intérieur, et deux bourrelets 50 radialement intérieurs aux flancs et destinés à coopérer avec la jante. Chaque bourrelet comporte une structure d'ancrage 700, la structure d'ancrage comprenant une armature de renforcement circonférentiel 70 qui est entourée par un profilé d'enrobage 75 ayant une épaisseur d'environ 2 mm. Dans le cas présent, l'armature de renforcement 70 est une tringle composée d'une pluralité de fils métalliques enroulés circonférentiellement. Le profilé d'enrobage 75 est composé d'un mélange caoutchouteux renforcé par des fibres textiles, en l'occurrence un tissu en Nylon 140/2. Les câbles en nylon du profilé d'enrobage 75 sont enrobés dans du mélange caoutchouteux ayant un module d'élasticité à 10 pour cent d'allongement (à 20° C) supérieur à 5 MPa . Les câbles sont espacés avec un pas de 1 mm et orientés selon une direction faisant un angle supérieur ou égal à 50 degrés avec la direction circonférentielle.

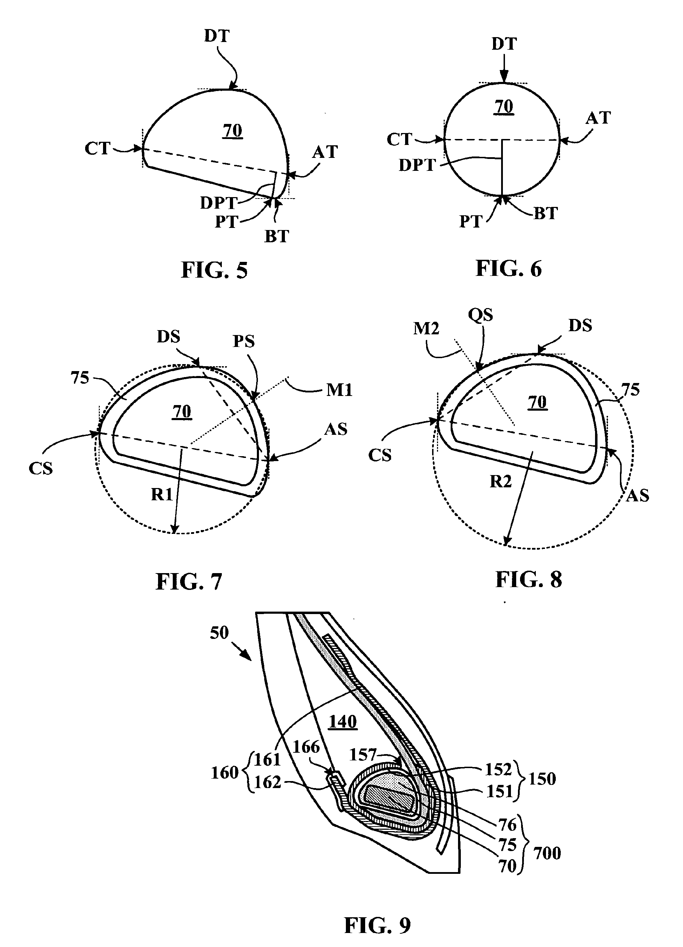

Comme le montre la figure 4, la structure d'ancrage 700 a, dans toute coupe radiale, un point AS axialement le plus à l'intérieur et un point CS axialement le plus à l'extérieur, un point BS radialement le plus à l'intérieur et un point DS radialement le plus à l'extérieur. De même, l'armature de renforcement circonférentiel a, dans toute coupe radiale, un point AT axialement le plus à l'intérieur et un point CT axialement le plus à l'extérieur, un point BT radialement le plus à l'intérieur et un point DT radialement le plus à l'extérieur. Ces points sont déterminés lorsque le pneumatique est monté sur une jante de montage et gonflé à sa pression de service. Si la géométrie de la structure d'ancrage 700 et/ou de l'armature de renforcement circonférentiel 70 sont telles qu'une pluralité de points se qualifient pour être axialement/radialement le plus à l'intérieur/extérieur, on retiendra l'un quelconque de ces points.

Le pneumatique 10 comporte également une armature de carcasse 60 radiale comprenant une pluralité de câbles métalliques formés ici de plusieurs fils élémentaires de 18/100 mm. Ces câbles sont noyés dans un mélange caoutchouteux et orientés selon une direction faisant un angle supérieur ou égal à 80 degrés avec la direction circonférentielle. L'armature de carcasse 60 est ancrée dans chacun des bourrelets à la structure d'ancrage 700 : en effet, l'armature de carcasse 60 est en partie enroulée autour de la structure d'ancrage 700 en passant axialement de l'intérieur du pneumatique vers l'extérieur. L'armature de carcasse suit donc le profil d'une partie du contour du profilé d'enrobage 75 et est couplée mécaniquement à ce profilé d'enrobage par adhésion du matériau composant le profilé d'enrobage et du matériau enrobant les renforts de l'armature de carcasse 60. Le point d'extrémité 65 de cette armature de carcasse est localisé sur ou à proximité de la structure d'ancrage 700 et situé axialement entre le point AS axialement le plus à l'intérieur et le point CS axialement le plus à l'extérieur de la structure d'ancrage 700 ; il est ici situé radialement à l'intérieur de la structure d'ancrage. Lorsqu'il est dit que le point d'extrémité 65 de l'armature de carcasse est localisé « à proximité » de la structure d'ancrage 700, il faut entendre par là que la distance minimale entre le point d'extrémité 65 et la structure d'ancrage 700 est inférieure ou égale à 4 mm.

Par ailleurs, un bourrage sur tringle 140 en mélange caoutchouteux est prévu dans le bourrelet. Le matériau de ce profilé est de préférence choisi de manière à avoir un module d'élasticité à 10 pour cent d'allongement (à 20° C) compris entre 2 et 5 MPa (ici, 4 MPa).

Le pneumatique 10 comporte en outre une armature de couplage 150, ici formée d'une pluralité de câbles en aramide 160x3 orientés selon une direction faisant un angle supérieur ou égal à 70 degrés avec la direction circonférentielle. Les câbles en aramide de l'armature de couplage 150 sont enrobés dans du mélange caoutchouteux ayant un module d'élasticité à 10 pour cent d'allongement (à 20° C) supérieur à 5 MPa . Les câbles sont espacés avec un pas de 1.25 mm. Cette armature de couplage 150 comprend une première partie 151 et une seconde partie 152. La première partie 151 est constituée par la partie de armature de couplage 150 en contact avec l'armature de carcasse. Cette première partie 151 s'étend entre un point d'extrémité 155 radialement à l'extérieur par rapport au point DS radialement le plus à l'extérieur de la structure d'ancrage 700 (voir figure 4), et le point d'extrémité 65 de l'armature de carcasse 60. L'armature de couplage 150 se prolonge au delà du point d'extrémité 65 de l'armature de carcasse 60 par une seconde partie 152 qui est en contact avec la structure d'ancrage 700 jusqu'à un point d'extrémité 157 radialement à l'extérieur de l'armature de renforcement circonférentiel 70. Le point d'extrémité 157 de l'armature de couplage 150 est situé axialement entre le point AS axialement le plus à l'intérieur et le point CS axialement le plus à l'extérieur de la structure d'ancrage 700.

Enfin, le pneumatique 10 comporte une armature de rigidité 160 enveloppant l'armature de couplage 150 et passant radialement à l'intérieur de la structure d'ancrage 700 et de l'armature de couplage 150 pour former une portion axialement interne 161 et une portion axialement externe 162. La portion axialement interne 161 est la portion de l'armature de rigidité 160 qui se trouve axialement à l'intérieur par rapport à l'armature de carcasse 60, et la portion axialement externe 162 est la portion de l'armature de rigidité 160 qui se trouve axialement à l'extérieur de l'armature de carcasse. On considère que a frontière entre la portion axialement interne 161 et la portion axialement externe 162 se situe à la position axiale du point 63 radialement le plus à l'intérieur de l'armature de carcasse 60. Lorsque l'armature de carcasse 60 comporte plusieurs points radialement le plus à l'intérieur, on retient l'un quelconque de ces points. La portion axialement interne 161 est en contact sur une longueur LC avec l'armature de carcasse 60 entre le point d'extrémité 165 de ladite portion axialement interne 161 et le point d'extrémité 155 de l'armature de couplage 150, le point d'extrémité 165 étant situé radialement à l'extérieur du point d'extrémité 155 de l'armature de couplage 150. On notera d'ailleurs que, à proximité du point d'extrémité 165 de la portion axialement interne 161, cette dernière est localement découplée de l'armature de carcasse de manière à diminuer les contraintes de cisaillement dans cette zone, une portion de mélange caoutchouteux étant intercalé entre les armatures.

L'armature de rigidité 160 est formée ici d'une pluralité de câbles en acier de dimension 6x35, espacés avec un pas de 2.5 mm. Le pas minimum pour des câbles de dimension 6x35 est de 2 mm, mais si des câbles en acier de dimension 19x18 étaient utilisés, le pas minimum serait de 1.4 mm. Les câbles sont orientés selon une direction moyenne faisant un angle inférieur ou égal à 50 degrés, et de préférence un angle supérieur ou égal à 15 degrés et inférieur ou égal à 30 degrés, avec la direction circonférentielle. Le choix de ces valeurs d'angle a notamment pour effet de faciliter la fabrication et le retournement de l'armature autour de l'armature de renforcement 70. Il a également pour effet de réduire de manière significative la déradialisation de l'armature de carcasse.

Comme cela est représenté à la figure 4, le point d'extrémité 166 axialement extérieur de l'armature de rigidité 160 est situé à une distance radiale DR du point BT radialement le plus à l'intérieur de l'armature de renforcement circonférentiel 70 de la structure d'ancrage 700. Dans un pneumatique selon l'invention, la distance radiale DR est de préférence supérieure ou égale à 0.8 fois la distance radiale DS séparant le point BT radialement le plus à l'intérieur et le point DT radialement le plus à l'extérieur de l'armature de renforcement circonférentiel 70 de la structure d'ancrage 700 et inférieure ou égale à 1.2 fois la distance radiale DS. En l'occurrence, DR = 11 mm, DS = 13 mm et DR/DS = 0.83.

La longueur de contact LC (ici, de 28 mm) de la portion axialement interne 161 de l'armature de rigidité 160 est ici égale à 50 pour cent de la distance DY (en l'occurrence, 55 mm) séparant le point d'extrémité 165 radialement le plus à l'extérieur de la portion axialement interne de l'armature de rigidité 160 et le point BT radialement le plus à l'intérieur de l'armature de renforcement circonférentiel 70 de la structure d'ancrage 700.

La distance DY est par ailleurs égale à 39 pour cent de la distance radiale DC entre le point 62 radialement le plus à l'extérieur de l'armature de carcasse et le point 63 radialement le plus à l'intérieur de la même armature de carcasse (ici, DC = 140 mm).

A la figure 3, l'extrémité de l'armature de rigidité 160 est couverte par une « gomme de bordure » 167. Cette gomme de bordure 167 protège les mélanges caoutchouteux environnant l'extrémité de l'armature de rigidité 160 de toute agression par les câbles de cette armature de rigidité 160, par indentation, lors du roulage liée aux mouvements des extrémités des câbles. La gomme de bordure 167 est composée d'un mélange caoutchouteux résistant aux coupures ; son module d'élasticité à 10 pour cent d'allongement (à 20° C) est de préférence supérieur à 5 MPa.

Dans toute section radiale, le contour de l'armature de renforcement circonférentiel possède une partie intérieure, s'étendant entre le point (AT) axialement le plus à l'intérieur de l'armature de renforcement circonférentiel 70 et le point (CT) axialement le plus à l'extérieur de l'armature de renforcement circonférentiel, en passant par le point (BT) radialement le plus à l'intérieur de l'armature de renforcement circonférentiel ; la distance de tout point situé sur la partie intérieure du contour de l'armature de renforcement circonférentiel 70 par rapport au segment reliant le point AT et le point CT est inférieure ou égale à 20 % de la de la longueur du segment reliant le point AT et le point CT. Comme cela est représenté à la figure 5, le point PT du contour situé entre AT et CT et qui est le plus éloigné du segment reliant AT et CT a une distance DPT par rapport au segment reliant AT et CT, la distance DPT étant égale à 17 % de la de la longueur du segment reliant le point AT et le point CT.

Ce critère exprime le fait que la partie intérieure du contour de l'armature de renforcement circonférentiel 70 qui relie les points AT et CT ne doit pas présenter une courbure trop importante. Comme le montre la figure 6, cette condition n'est pas remplie dans le cas d'une tringle ronde car ici, la distance DPT est égale à 50 % de la longueur du segment reliant le point AT et le point CT.

Le segment reliant le point BT et le point CT forme de préférence un angle α (alpha) supérieur ou égal à 10° et inférieur ou égal à 20° avec la direction axiale lorsque le pneumatique est monté sur sa jante de montage et gonflé à sa pression de service. En l'occurrence, l'angle α (alpha) est égal à 20°.

La longueur curviligne du contour de l'armature de renforcement circonférentiel, entre le point BT et le point CT est de préférence supérieure ou égale à 10 mm ; en l'occurrence elle est de 20 mm.

Par ailleurs, dans un pneumatique selon l'invention, dans toute section radiale, le rayon R1 passant par :
le point AS axialement le plus à l'intérieur de la structure d'ancrage 700 ;
le point DS radialement le plus à l'extérieur de la structure d'ancrage 700 ; et
le point PS d'intersection entre la médiatrice M1 du segment reliant le point AS et le point DS et le contour de la structure d'ancrage 700 ;
est supérieur ou égal à un quart de la longueur du segment reliant le point AS axialement le plus à l'intérieur de la structure d'ancrage 700 et le point CS axialement le plus à l'extérieur de la structure d'ancrage, et inférieur ou égal à 1.5 fois la longueur du segment reliant le point AS et le point CS.

La figure 7 illustre ces grandeurs pour le pneumatique de la figure 3 où la structure d'ancrage est formée par l'armature de renforcement circonférentiel 70 et le profilé d'enrobage 75. En l'occurrence, le rayon R1 est égal à 50 % de la longueur du segment reliant le point AS et le point CS.

Enfin, dans un pneumatique selon l'invention, dans toute section radiale, le rayon R2 passant par :
le point CS axialement le plus à l'extérieur de la structure d'ancrage 700 ;
le point DS radialement le plus à l'extérieur de la structure d'ancrage 700 ; et
le point QS d'intersection entre la médiatrice M2 du segment reliant le point CS et le point DS, et le contour de la structure d'ancrage ;
est supérieur ou égal à un quart de la longueur du segment reliant le point AS axialement le plus à l'intérieur de la structure d'ancrage 700 et le point CS axialement le plus à l'extérieur de la structure d'ancrage 700, et inférieur ou égal à 1.5 fois la longueur du segment reliant le point AS et le point CS.

La figure 8 illustre ces grandeurs pour le pneumatique de la figure 3. En l'occurrence, le rayon R2 est égal à 60 % de la longueur du segment reliant le point AS et le point CS.

Dans un pneumatique selon l'invention, la longueur de contact entre l'armature de carcasse 60 et la structure d'ancrage 700, mesurée à partir du point BS radialement le plus à l'intérieur de la structure d'ancrage 700, en direction du point CS axialement le plus à l'extérieur de la structure d'ancrage 700, est de préférence supérieure ou égale à 10 mm. En l'occurrence, elle est de 13 mm. Il peut être avantageux d'augmenter encore cette longueur de contact en fonction de la pression de gonflage préconisée pour le pneumatique et selon la charge portée par le pneumatique. A titre d'exemple, dans la dimension 295/60 R 22.5, pour une pression de gonflage de 9 bars, la longueur de contact est de préférence supérieure ou égale à 15 mm.

Dans le mode de réalisation illustré à la figure 3, la géométrie du bourrelet a été obtenue en utilisant une tringle 70 ayant une partie radialement intérieure plane et une partie radialement extérieure arrondie. Il ne s'agit bien entendu pas de la seule manière possible d'obtenir une structure d'ancrage conforme à l'invention. Il est notamment possible de prévoir une tringle de section quelconque, pourvu qu'elle ait un contour interne tel que défini dans la revendication 1, et de lui associer, radialement à l'extérieur de la tringle, une portion 76 de mélange caoutchouteux ayant une section arrondie, comme cela est illustré à la figure 9. Ce mode de réalisation comporte, comme le mode de réalisation décrit à la figure 3, l'avantage d'une grande facilité de mise en oeuvre sur des outils de confection traditionnels et bien connus de la personne du métier. La présence d'une portion 76 de mélange caoutchouteux a aussi pour effet d'empêcher la formation d'une poche d'air entre la tringle 70 et le « bourrage sur tringle » 140. Ici, le point d'extrémité 157 est situé radialement à l'extérieur de la structure d'ancrage, mais ce n'est pas une caractéristique essentielle de l'invention. Il serait également possible de prévoir que le point d'extrémité 157 soit situé à l'intérieur de la structure d'ancrage, pourvu que le point d'extrémité 157 se trouve radialement à l'extérieur de l'armature de renforcement circonférentiel,

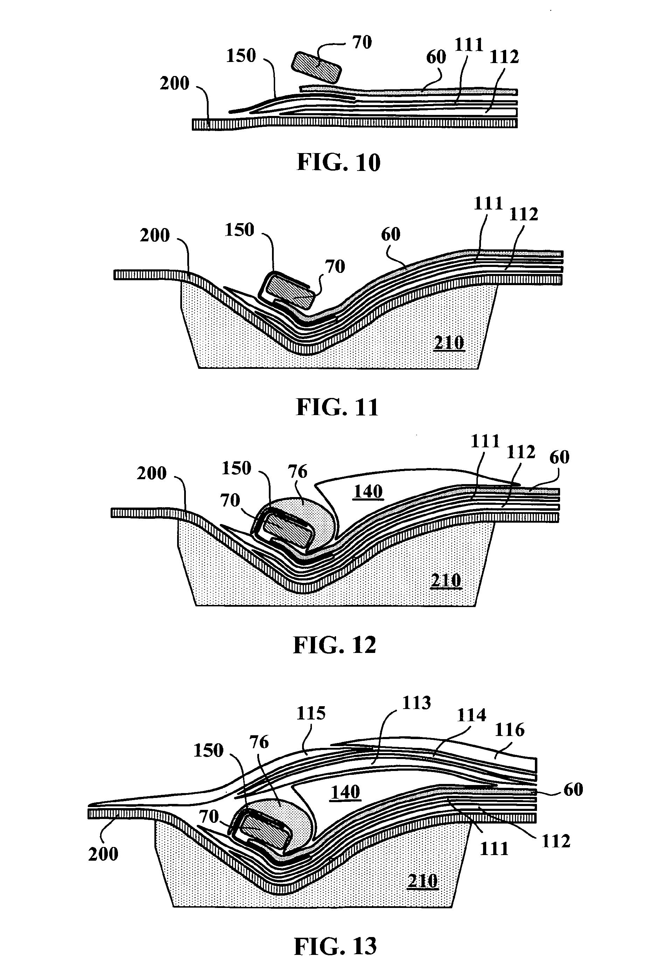

La figure 10 représente, en section radiale, une partie de ce qui deviendra un pneumatique selon l'invention, après une première étape de confection. Des mélanges caoutchouteux 111 et 112 ont été posées sur un tambour de confection 200 non gonflé. L'armature de couplage 150 et l'armature de carcasse 60 ont été disposés sur ces mélanges caoutchouteux 111 et 112, tout comme une tringle métallique 70.

La figure 11 représente la même partie après l'enroulement de l'armature de couplage 150 autour de la tringle et le gonflage du tambour de confection 200. Un anneau de confection 210 est également représenté.

La figure 12 représente la même partie après la pose d'une portion 76 de mélange caoutchouteux ayant une section arrondie ainsi que d'un « bourrage sur tringle » 140.

Ensuite d'autres couches de mélange caoutchouteux 113 à 116 sont posées, comme cela est représenté à la figure 13.

La suite des opérations, à savoir la conformation du pneumatique, est bien connue de la personne du métier. Lors de cette conformation, le bourrage sur tringle 140 et les éléments qui s'attachent au bourrage sur tringle 140 effectuent une rotation autour de la structure d'ancrage formée par la tringle 70 et la portion 76 de mélange caoutchouteux ayant une section arrondie. La demanderesse a constaté que la section arrondie de la portion 76 de mélange caoutchouteux permet une fabrication plus robuste et aisée, et résulte en une meilleure endurance du bourrelet.

## Revendications

1. Pneumatique (10) pour véhicule poids lourd, destiné à être monté sur une jante, comportant :
un sommet comprenant une armature de sommet (80,90) surmontée d'une bande de roulement (30) ;
deux flancs (40) prolongeant le sommet radialement vers l'intérieur ;
deux bourrelets (50) radialement intérieurs aux flancs et destinés à coopérer avec la jante, chaque bourrelet comportant une structure d'ancrage (700), la structure d'ancrage ayant, dans toute coupe radiale, un point (AS) axialement le plus à l'intérieur et un point (CS) axialement le plus à l'extérieur, un point (BS) radialement le plus à l'intérieur et un point (DS) radialement le plus à l'extérieur, la structure d'ancrage comprenant une armature de renforcement circonférentiel (70), l'armature de renforcement circonférentiel ayant, dans toute coupe radiale, un point (AT) axialement le plus à l'intérieur et un point (CT) axialement le plus à l'extérieur, un point (BT) radialement le plus à l'intérieur et un point (DT) radialement le plus à l'extérieur ;
une armature de carcasse (60) radiale comprenant une pluralité d'éléments de renforcement (61) orientés selon une direction faisant un angle supérieur ou égal à 80 degrés avec la direction circonférentielle, l'armature de carcasse étant ancrée dans chacun des bourrelets à la structure d'ancrage, l'armature de carcasse étant en partie enroulée autour de la structure d'ancrage en passant axialement de l'intérieur du pneumatique vers l'extérieur, de sorte que, dans toute section radiale, un point d'extrémité (65) de cette armature de carcasse est localisé sur ou à proximité de la structure d'ancrage et situé axialement entre le point axialement le plus à l'intérieur et le point axialement le plus à l'extérieur de la structure d'ancrage ;
une armature de couplage (150), formée d'une pluralité de renforts orientés dans une direction faisant un angle supérieur ou égal à 70 degrés avec la direction circonférentielle, comprenant une première partie (151) en contact avec l'armature de carcasse entre un premier point d'extrémité (155), le premier point d'extrémité étant radialement à l'extérieur par rapport au point (DS) radialement le plus à l'extérieur de la structure d'ancrage, et ledit point d'extrémité (65) de l'armature de carcasse, l'armature de couplage se prolongeant au delà dudit point d'extrémité (65) de l'armature de carcasse par une seconde partie (152) en contact avec la structure d'ancrage jusqu'à un deuxième point d'extrémité (157) radialement à l'extérieur de l'armature de renforcement circonférentiel, le deuxième point d'extrémité de l'armature de couplage étant situé axialement entre le point (AS) axialement le plus à l'intérieur et le point (CS) axialement le plus à l'extérieur de la structure d'ancrage ;
dans lequel, dans toute section radiale, le rayon (R1) passant par :
le point (AS) axialement le plus à l'intérieur de la structure d'ancrage (700) ;
le point (DS) radialement le plus à l'extérieur de la structure d'ancrage ; et
le point (PS) d'intersection entre la médiatrice (M1) du segment reliant le point (AS) axialement le plus à l'intérieur de la structure d'ancrage et le point (DS) radialement le plus à l'extérieur de la structure d'ancrage, et le contour de la structure d'ancrage ;
est supérieur ou égal à un quart de la longueur du segment reliant le point (AS) axialement le plus à l'intérieur de la structure d'ancrage et le point (CS) axialement le plus à l'extérieur de la structure d'ancrage, et inférieur ou égal à 1.5 fois la longueur du segment reliant le point (AS) axialement le plus à l'intérieur de la structure d'ancrage et le point (CS) axialement le plus à l'extérieur de la structure d'ancrage ;
et dans lequel, dans toute section radiale, le rayon (R2) passant par :
le point (CS) axialement le plus à l'extérieur de la structure d'ancrage (700) ;
le point (DS) radialement le plus à l'extérieur de la structure d'ancrage ; et
le point (QS) d'intersection entre la médiatrice (M2) du segment reliant le point (CS) axialement le plus à l'extérieur de la structure d'ancrage et le point (DS) radialement le plus à l'extérieur de la structure d'ancrage, et le contour de la structure d'ancrage ;
est supérieur ou égal à un quart de la longueur du segment reliant le point (AS) axialement le plus à l'intérieur de la structure d'ancrage et le point (CS) axialement le plus à l'extérieur de la structure d'ancrage, et inférieur ou égal à 1.5 fois la longueur du segment reliant le point (AS) axialement le plus à l'intérieur de la structure d'ancrage et le point (CS) axialement le plus à l'extérieur de la structure d'ancrage,
**caractérisé en ce que** dans toute section radiale, le contour de l'armature de renforcement circonférentiel possède une partie intérieure, s'étendant entre le point (AT) axialement le plus à l'intérieur de l'armature de renforcement circonférentiel (70) et le point (CT) axialement le plus à l'extérieur de l'armature de renforcement circonférentiel, en passant par le point (BT) radialement le plus à l'intérieur de l'armature de renforcement circonférentiel, et la distance de tout point situé sur la partie intérieure du contour de l'armature de renforcement circonférentiel par rapport au segment reliant le point (AT) axialement le plus à l'intérieur de l'armature de renforcement circonférentiel et le point (CT) axialement le plus à l'extérieur de l'armature de renforcement circonférentiel est inférieure ou égale à 20 % de la longueur du segment reliant le point (AT) axialement le plus à l'intérieur de l'armature de renforcement circonférentiel et le point (CT) axialement le plus à l'extérieur de l'armature de renforcement circonférentiel.

2. Pneumatique selon la revendication 1, dans lequel ledit point d'extrémité (65) de l'armature de carcasse (60) localisé sur ou à proximité de la structure d'ancrage (700) est situé radialement à l'intérieur de la structure d'ancrage.

3. Pneumatique selon l'une quelconque des revendications 1 ou 2, dans lequel le segment reliant le point (BT) radialement le plus à l'intérieur de l'armature de renforcement circonférentiel (70) et le point (CT) axialement le plus à l'extérieur de l'armature de renforcement circonférentiel forme un angle α (alpha) avec la direction axiale, l'angle α (alpha) étant supérieur ou égal à 10° et inférieur ou égal à 20°.

4. Pneumatique selon l'une quelconque des revendications 1 à 3, dans lequel, dans toute section radiale, la longueur curviligne du contour de l'armature de renforcement circonférentiel (70), entre le point (BT) radialement le plus à l'intérieur de l'armature de renforcement circonférentiel et le point (CT) axialement le plus à l'extérieur de l'armature de renforcement circonférentiel, est supérieure ou égale à 10 mm.

5. Pneumatique selon l'une quelconque des revendications 1 à 4, dans lequel la longueur de contact entre l'armature de carcasse (60) et la structure d'ancrage (700), mesurée à partir du point (BS) radialement le plus à l'intérieur de la structure d'ancrage, en direction du point (CS) axialement le plus à l'extérieur de la structure d'ancrage, est supérieure ou égale à 10 mm.

6. Pneumatique selon l'une quelconque des revendications 1 à 5, comportant en outre une armature de rigidité (160) enveloppant l'armature de couplage (150) et passant radialement à l'intérieur de la structure d'ancrage (700) et de l'armature de couplage pour former une portion axialement interne (161) et une portion axialement externe (162), la portion axialement interne étant axialement à l'intérieur par rapport à l'armature de carcasse (60), et la portion axialement externe étant axialement à l'extérieur de l'armature de carcasse, la portion axialement interne étant en contact sur une longueur LC avec l'armature de carcasse entre le point d'extrémité (165) de ladite portion axialement interne et le point d'extrémité (155) de l'armature de couplage, le point d'extrémité de ladite portion axialement interne étant situé radialement à l'extérieur du point d'extrémité de l'armature de couplage, cette armature de rigidité étant formée d'une pluralité de renforts orientés selon une direction moyenne faisant un angle inférieur ou égal à 50 degrés avec la direction circonférentielle.

7. Pneumatique selon la revendication 6, dans lequel le point d'extrémité (166) axialement extérieur de l'armature de rigidité est situé à une distance radiale DR du point (BT) radialement le plus à l'intérieur de l'armature de renforcement circonférentiel (70) de la structure d'ancrage (700), la distance radiale DR étant supérieure ou égale à 0.8 fois la distance radiale DS séparant le point (BT) radialement le plus à l'intérieur et le point (DT) radialement le plus à l'extérieur de l'armature de renforcement circonférentiel (70) de la structure d'ancrage (700) et inférieure ou égale à 1.2 fois la distance radiale DS séparant le point radialement le plus à l'intérieur et le point radialement le plus à l'extérieur de l'armature de renforcement circonférentiel de la structure d'ancrage.

## Patentansprüche

1. Luftreifen (10) für Schwerlastfahrzeug, der dazu bestimmt ist, auf einer Felge montiert zu werden, und Folgendes umfasst:
eine Oberseite, die eine Oberseitenbewehrung (80, 90) aufweist, über der eine Lauffläche (30) angebracht ist;
zwei Seitenflächen (40), die die Oberseite radial nach innen verlängern;
zwei Wulste (50), die sich radial innerhalb der Seitenflächen befinden und dazu bestimmt sind, mit der Felge zusammenzuwirken, wobei jeder Wulst eine Verankerungsstruktur (700) aufweist, wobei die Verankerungsstruktur in jedem radialen Schnitt einen axial innersten Punkt (AS) und einen axial äußersten Punkt (CS), einen radial innersten Punkt (BS) und einen radial äußersten Punkt (DS) besitzt, wobei die Verankerungsstruktur eine Umfangsverstärkungsbewehrung (70) aufweist, wobei die Umfangsverstärkungsbewehrung in jedem radialen Schnitt einen axial innersten Punkt (AT) und einen axial äußersten Punkt (CT), einen radial innersten Punkt (BT) und einen radial äußersten Punkt (DT) besitzt;
eine radiale Karkassenbewehrung (60), die mehrere Verstärkungselemente (61) aufweist, die in einer Richtung orientiert sind, die mit der Umfangsrichtung einen Winkel bildet, der größer oder gleich 80 Grad ist, wobei die Karkassenbewehrung in jedem der Wulste mit der Verankerungsstruktur verankert ist, wobei die Karkassenbewehrung teilweise um die Verankerungsstruktur gewickelt ist, indem sie axial von innerhalb des Luftreifens nach außen verläuft, dass sich in jedem radialen Schnitt ein Endpunkt (65) dieser Karkassenbewehrung bei der Verankerungsstruktur oder in deren Nähe befindet und sich axial zwischen dem axial innersten Punkt und dem axial äußersten Punkt der Verankerungsstruktur befindet;
eine Kopplungsbewehrung (150), die aus mehreren Verstärkungen gebildet ist, die in einer Richtung orientiert sind, die mit der Umfangsrichtung einen Winkel bildet, der größer oder gleich 70 Grad ist, und zwischen einem ersten Endpunkt (155), wobei sich der erste Endpunkt in Bezug auf den radial äußersten Punkt (DS) der Verankerungsstruktur radial außerhalb befindet, und dem Endpunkt (65) der Karkassenbewehrung einen ersten Teil (151) in Kontakt mit der Karkassenbewehrung aufweist, wobei die Kopplungsbewehrung über den Endpunkt (65) der Karkassenbewehrung durch einen zweiten Teil (152) in Kontakt mit der Verankerungsstruktur bis zu einem zweiten Endpunkt (157) verlängert ist, der sich radial außerhalb der Umfangsverstärkungsbewehrung befindet, wobei sich der zweite Endpunkt der Kopplungsbewehrung axial zwischen dem axial innersten Punkt (AS) und dem axial äußersten Punkt (CS) der Verankerungsstruktur befindet;
wobei in jedem radialen Schnitt der Radius (R1), der verläuft durch:
den axial innersten Punkt (AS) der Verankerungsstruktur (700);
den radial äußersten Punkt (DS) der Verankerungsstruktur; und
den Schnittpunkt (PS) zwischen der Mittelsenkrechten (M1) des Segments, das den axial innersten Punkt (AS) der Verankerungsstruktur mit dem radial äußersten Punkt (DS) der Verankerungsstruktur verbindet, und dem Umriss der Verankerungsstruktur,
größer oder gleich einem Viertel der Länge des Segments ist, das den axial innersten Punkt (AS) der Verankerungsstruktur und den axial äußersten Punkt (CS) der Verankerungsstruktur verbindet, und kleiner oder gleich der 1,5-fachen Länge des Segments ist, das den axial innersten Punkt (AS) der Verankerungsstruktur und den axial äußersten Punkt (CS) der Verankerungsstruktur verbindet;
und wobei in jedem radialen Schnitt der Radius (R2), der verläuft durch:
den axial äußersten Punkt (CS) der Verankerungsstruktur (700);
den radial äußersten Punkt (DS) der Verankerungsstruktur; und
den Schnittpunkt (QS) zwischen der Mittelsenkrechten (M2) des Segments, das den axial äußersten Punkt (CS) der Verankerungsstruktur und den radial äußersten Punkt (DS) der Verankerungsstruktur verbindet, und dem Umriss der Verankerungsstruktur,
größer oder gleich einem Viertel der Länge des Segments ist, das den axial innersten Punkt (AS) der Verankerungsstruktur und den axial äußersten Punkt (CS) der Verankerungsstruktur verbindet, und kleiner oder gleich der 1,5-fachen Länge des Segments ist, das den axial innersten Punkt (AS) der Verankerungsstruktur und den axial äußersten Punkt (CS) der Verankerungsstruktur verbindet,
**dadurch gekennzeichnet, dass** in jedem radialen Schnitt der Umriss der Umfangsverstärkungsbewehrung einen inneren Teil besitzt, der sich zwischen dem axial innersten Punkt (AT) der Umfangsverstärkungsbewehrung (70) und dem axial äußersten Punkt (CT) der Umfangsbewehrungsverstärkung erstreckt, indem er durch den radial innersten Punkt (BT) der Umfangsverstärkungsbewehrung verläuft, und der Abstand jedes Punkts, der sich auf dem inneren Teil des Umrisses der Umfangsverstärkungsbewehrung in Bezug auf das Segment, das den axial innersten Punkt (AT) der Umfangsverstärkungsbewehrung und den axial äußersten Punkt (CT) der Umfangsverstärkungsbewehrung verbindet, kleiner oder gleich 20 % der Länge des Segments ist, das den axial innersten Punkt (AT) der Umfangsverstärkungsbewehrung und den axial äußersten Punkt (CT) der Umfangsverstärkungsbewehrung verbindet.

2. Luftreifen nach Anspruch 1, wobei der Endpunkt (65) der Karkassenbewehrung (60), der sich auf der Verankerungsstruktur (700) oder in deren Nähe befindet, sich radial innerhalb der Verankerungsstruktur befindet.

3. Luftreifen nach einem der Ansprüche 1 oder 2, wobei das Segment, das den radial innersten Punkt (BT) der Umfangsverstärkungsbewehrung (70) und den axial äußersten Punkt (CT) der Umfangsverstärkungsbewehrung verbindet, mit der axialen Richtung einen Winkel α (alpha) bildet, wobei der Winkel α (alpha) größer oder gleich 10° und kleiner oder gleich 20° ist.

4. Luftreifen nach einem der Ansprüche 1 bis 3, wobei in jedem radialen Schnitt die gekrümmte Länge des Umrisses der Umfangsverstärkungsbewehrung (70) zwischen dem radial innersten Punkt (BT) der Umfangsverstärkungsbewehrung und dem axial äußersten Punkt (CT) der Umfangsverstärkungsbewehrung größer oder gleich 10 mm ist.

5. Luftreifen nach einem der Ansprüche 1 bis 4, wobei die Kontaktlänge zwischen der Karkassenbewehrung (60) und der Verankerungsstruktur (700) gemessen ab dem radial innersten Punkt (BS) der Verankerungsstruktur in Richtung des axial äußersten Punkts (CS) der Verankerungsstruktur größer oder gleich 10 mm ist.

6. Luftreifen nach einem der Ansprüche 1 bis 5, der außerdem eine Versteifungsbewehrung (160) umfasst, die die Kopplungsbewehrung (150) umhüllt und radial innerhalb der Verankerungsstruktur (700) und der Kopplungsstruktur verläuft, um einen axial inneren Abschnitt (161) und einen axial äußeren Abschnitt (162) zu bilden, wobei sich der axial innere Abschnitt in Bezug auf die Karkassenbewehrung (60) axial innerhalb befindet und wobei sich der axial äußere Abschnitt axial außerhalb der Karkassenbewehrung befindet, wobei der axial innere Abschnitt auf einer Länge LC mit der Karkassenbewehrung zwischen dem Endpunkt (165) des axial inneren Abschnitts und dem Endpunkt (155) der Kopplungsbewehrung in Kontakt ist, wobei sich der Endpunkt des axial inneren Abschnitts radial außerhalb des Endpunkts der Kopplungsbewehrung befindet, wobei diese Versteifungsbewehrung aus mehreren Verstärkungen gebildet ist, die in einer mittleren Richtung orientiert sind, die mit der Umfangsrichtung einen Winkel bildet, der kleiner oder gleich 50° ist.

7. Luftreifen nach Anspruch 6, wobei sich der Endpunkt (166) axial außerhalb der Versteifungsbewehrung in einem radialen Abstand DR von dem radial innersten Punkt (BT) der Umfangsverstärkungsbewehrung (70) der Verankerungsstruktur (700) befindet, wobei der radiale Abstand DR größer oder gleich dem 0,8-fachen radialen Abstand DS ist, der den radial innersten Punkt (BT) und den radial äußersten Punkt (DT) der Umfangsverstärkungsbewehrung (70) der Verankerungsstruktur (700) trennt, und kleiner oder gleich dem 1,2-fachen radialen Abstand DS ist, der den radial innersten Punkt und den radial äußersten Punkt der Umfangsverstärkungsbewehrung der Verankerungsstruktur trennt.

## Claims

1. Tyre (10) for a heavy vehicle, intended to be mounted on a rim, comprising:
a crown comprising a crown reinforcement (80, 90) surmounted by a tread (30);
two sidewalls (40) extending the crown radially inwards;
two beads (50) radially on the inside of the sidewalls and intended to collaborate with the rim, each bead comprising an anchoring structure (700), the anchoring structure having, in any radial cross section, an axially innermost point (AS) and an axially outermost point (CS), a radially innermost point (BS) and a radially outermost point (DS), the anchoring structure comprising a circumferential reinforcement (70), the circumferential reinforcement having, in any radial cross section, an axially innermost point (AT) and an axially outermost point (CT), a radially innermost point (BT) and a radially outermost point (DT);
a radial carcass reinforcement (60) comprising a plurality of reinforcing elements (61) oriented in a direction that makes an angle greater than or equal to 80 degrees with the circumferential direction, the carcass reinforcement being anchored in each of the beads to the anchoring structure, the carcass reinforcement being partially wrapped around the anchoring structuring by passing axially from the inside of the tyre to the outside so that in any radial section, an endpoint (65) of this carcass reinforcement is located on or near the anchoring structure and situated axially between the axially innermost point and the axially outermost point of the anchoring structure;
a coupling reinforcement (150), formed by a plurality of reinforcers oriented in a direction making an angle greater than or equal to 70 degrees with the circumferential direction, comprising a first part (151) in contact with the carcass reinforcement between a first endpoint (155), the first endpoint being radially on the outside of the radially outermost point (DS) of the anchoring structure, and the said endpoint (65) of the carcass reinforcement, the coupling reinforcement extending beyond the said endpoint (65) of the carcass reinforcement in the form of a second part (152) in contact with the anchoring structure as far as a second endpoint (157) radially on the outside of the circumferential reinforcement, the second endpoint of the coupling reinforcement being situated axially between the axially innermost point (AS) and the axially outermost point (CS) of the anchoring structure;
in which, in any radial section, the radius (R1) passing through:
the axially innermost point (AS) of the anchoring structure (700);
the radially outermost point (DS) of the anchoring structure; and
the point (PS) of intersection between the midpoint (M1) of the segment connecting the axially innermost point (AS) of the anchoring structure and the radially outermost point (DS) of the anchoring structure and the contour of the anchoring structure; is greater than or equal to one quarter of the length of the segment connecting the axially innermost point (AS) of the anchoring structure and the axially outermost point (CS) of the anchoring structure, and less than or equal to 1.5 times the length of the segment connecting the axially innermost point (AS) of the anchoring structure and the axially outermost point (CS) of the anchoring structure;
and in which, in any radial section, the radius (R2) passing through:
the axially outermost point (CS) of the anchoring structure (700);
the radially outermost point (DS) of the anchoring structure; and
the point (QS) of intersection between the midpoint (M2) of the segment connecting the axially outermost point (CS) of the anchoring structure and the radially outermost point (DS) of the anchoring structure and the contour of the anchoring structure; is greater than or equal to one quarter of the length of the segment connecting the axially innermost point (AS) of the anchoring structure and the axially outermost point (CS) of the anchoring structure, and less than or equal to 1.5 times the length of the segment connecting the axially innermost point (AS) of the anchoring structure and the axially outermost point (CS) of the anchoring structure, **characterized in that** in any radial section, the contour of the circumferential reinforcement has an interior part, extending between the axially innermost point (AT) of the circumferential reinforcement (70) and the axially outermost point (CT) of the circumferential reinforcement, passing through the radially innermost point (BT) of the circumferential reinforcement, and the distance of any point situated on the interior part of the contour of the circumferential reinforcement with respect to the segment connecting the axially innermost point (AT) of the circumferential reinforcement and the axially outermost point (CT) of the circumferential reinforcement is less than or equal to 20% of the length of the segment connecting the axially innermost point (AT) of the circumferential reinforcement and the axially outermost point (CT) of the circumferential reinforcement.

2. Tyre according to Claim 1, in which the said endpoint (65) of the carcass reinforcement (60) that is located on or near the anchoring structure (700) is situated radially on the inside of the anchoring structure.

3. Tyre according to either one of Claims 1 and 2, in which the segment connecting the radially innermost point (BT) of the circumferential reinforcement (70) and the axially outermost point (CT) of the circumferential reinforcement makes an angle α (alpha) with the axial direction, the angle α (alpha) being greater than or equal to 10% and less than or equal to 20%.

4. Tyre according to any one of Claims 1 to 3, in which in any radial section, the curvilinear length of the contour of the circumferential reinforcement (70), between the radially innermost point (BT) of the circumferential reinforcement and the axially outermost point (CT) of the circumferential reinforcement is greater than or equal to 10 mm.

5. Tyre according to any one of Claims 1 to 4, in which the length of contact between the carcass reinforcement (60) and the anchoring structure (700), measured from the radially innermost point (BS) of the anchoring structure towards the axially outermost point (CS) of the anchoring structure is greater than or equal to 10 mm.

6. Tyre according to any one of Claims 1 to 5, further comprising a stiffness reinforcement (160) enveloping the coupling reinforcement (150) and passing radially on the inside of the anchoring structure (700) and of the coupling reinforcement in order to form an axially internal portion (161) and an axially external portion (162), the axially internal portion being axially on the inside in relation to the carcass reinforcement (60), and the axially external portion being axially on the outside of the carcass reinforcement, the axially internal portion being in contact over a length LC with the carcass reinforcement between the endpoint (165) of the said axially internal portion and the endpoint (155) of the coupling reinforcement, the endpoint of the said axially internal portion being situated radially on the outside of the endpoint of the coupling reinforcement, this stiffness reinforcement being formed of a plurality of reinforcers oriented in a mean direction that makes an angle less than or equal to 50 degrees with the circumferential direction.

7. Tyre according to Claim 6, in which the axially outer endpoint (166) of the rigidity reinforcement is situated a radial distance DR from the radially innermost point (BT) of the circumferential reinforcement (70) of the anchoring structure (700), the radial distance DR being greater than or equal to 0.8 times the radial distance DS separating the radially innermost point (BT) and the radially outermost point (DT) of the circumferential reinforcement (70) of the anchoring structure (700) and less than or equal to 1.2 times the radial distance DS separating the radially innermost point and the radially outermost point of the circumferential reinforcement of the anchoring structure.
